# EUROPEAN PATENT SPECIFICATION

(11) **EP 2 085 431 B1**
(45) Date of publication and mention of the grant of the patent: **29.06.2011**
(21) Application number: 08290117.4
(22) Date of filing: 24.01.2008
(51) Int. Cl.: C09B 57/14, C09B 5/00, C09B 5/24, C08K 5/45, B65D 81/30

(54) **Benzothioxanthene dyes with improved application and toxicological properties**
Benzothioxanthen-Farbstoffe mit verbesserter Anwendung und toxikologischen Eigenschaften
Colorants de benzotèene dotés d'une application et de propriétés toxicologiques améliorées

(43) Date of publication of application: 05.08.2009
(73) Proprietor: Clariant Finance (BVI) Limited, Road Town, Tortola (VG)
(72) Inventor: Pourcheron, Laurent, 68440 Dietwiller (FR); Sandri, Maurizio, 68100 Mulhouse (FR)
(74) Representative: Hütter, Klaus

(56) References cited:
- EP-A- 0 492 232
- WO-A-00/27908
- WO-A-2006/008239
- FR-A- 1 470 793
- US-A- 3 829 439
- DATABASE CA [Online] CHEMICAL ABSTRACTS SERVICE, COLUMBUS, OHIO, US; 1999, JI, DONGFENG ET AL: "Synthesis and dyeing properties of solvent orange 63" XP002515922 retrieved from STN Database accession no. 1999:253396 & RANLIAO GONGYE , 35(3), 4-6, 3 CODEN: RAGOFS; ISSN: 1006-6632, 1998,

## Description

The invention relates to an improved benzothioxanthene dye, which prevents corrosion of processing equipment and possesses much better toxicological properties.

Benzothioxanthene dyestuffs are well-known in the art (US 3,828,072) for use as fluorescing dyestuffs. C.I. Solvent Orange 63 (Constitution Number C.I. 68550, CAS Number 16294-75-0, also manufactured by Clariant under trade name Hostasol Red GG) is a known polymer soluble dyestuff with a brilliant fluorescent hue, that is broadly used for instance in the manufacture of warning markers and lane marking tapes of various plastic materials.

An improved synthesis of C.I. Solvent Orange 63 and other benzothioxanthene compounds is described in EP-A-0 492 232 giving higher yields and a purity necessary to be fluorescent.

Recently, some processor of C.I. Solvent Orange 63, in particular those manufacturing thin lane marking tapes, reported corrosion on the metal parts of their processing equipments (extruder barrels, slab dies).
After various investigations, we suspected a correlation between the content of organic bromine in the Solvent Orange 63 dyestuff used and the appearance of corrosion. It was supposed that, as in the case of some brominated organic flame retardants, at the conditions of plastics processing (high temperature, mechanical shear, oxygen and humidity of the air) part of organic bromine might be released in form of hydrobromic acid corrosive to metal parts.
Accordingly, we tried to purify the dyestuff by applying common purification methods such as crystallization and washing with solvents. The results, however, were disappointing, because the corrosive activity persisted unchanged.

In the same period of time we tested some important toxicological properties on our products, to be prepared for the forthcoming introduction of new, more stringent directives on product safety, like 793/93/EEC, 67/548/EEC, and their amendments. In that occasion, we found that Solvent Orange 63 products that are in full compliance with the present purity requirements (content of heavy metals, aromatic amines), and were so far considered as safe, gave unfavorable toxicological results in these experimental tests.
Due to the availability of different grades of Solvent Orange 63 for the corrosion tests, we decided to submit them all to an Ames test, one of several genotoxicity assays for the assessment of product safety.
The Ames test is a screening for the mutagenic effect of substances on microorganisms, cells and tissue cultures and therefore their potential carcinogenic effect. This relies on the observation that the most common cause of cancer is somatic mutations brought about by DNA damage. Chemicals that damage bacterial DNA, and induce mutations, are therefore likely to cause mutations in mammalian cells. Assay is done using bacteria, which gives fast and relatively cheap results and avoids the controversial tests on animals.
The strains used are among those recommended by OECD 471 : Salmonella typhimurium and Escherichia coli.
Surprisingly, the batch of Solvent Orange 63 having originated corrosion problems in processing was mutagenic to Salmonella Typhimurium strain TA98 in the presence of metabolic activation. Similarly, attempts for purifying the dyestuff, as reported above, did not result in an improvement of toxicological behaviour.
We further submitted the same samples to a LLNA screening, in order to assess the potential skin sensitization properties of the product.
The Local Lymph Node Assay (LLNA) is an alternative to the guinea pig sensitization test which is employed by the pharmaceutical, chemical, consumer product and cosmetic industries to identify and characterize substances with immunotoxic properties.
As by the Ames Test, the result was that the batch of Solvent Orange 63 having originated corrosion problems in processing showed sensitizing properties.

It is therefore an object of the invention to provide benzothioxanthene dyes in a quality which permits to avoid corrosion on processing equipments, to improve the industrial hygiene in handling and to be safe in regulated applications, such as the coloration of consumer goods and food packaging.

Surprisingly, it was found that a certain amount of brominated benzothioxanthene, usually between 1 and 9 % by weight, is responsible for the above mentioned undesired effects.
It was further found, surprisingly, that only a purification of the starting material, i. e. a 3-bromobenzanthrone, in order to reduce the amount of dibromobenzanthrone, in particular 3,9-dibromobenzanthrone, to 0.5 % or less, would eliminate the undesired corrosive and toxicological effects of the dyestuff.

Therefore, one aspect of the present invention is the use of a benzothioxanthene dye composition for the coloration of consumer goods and food packaging, characterized in that said benzothioxanthene dye composition contains at least 99.0 % by weight of a compound of formula (1) 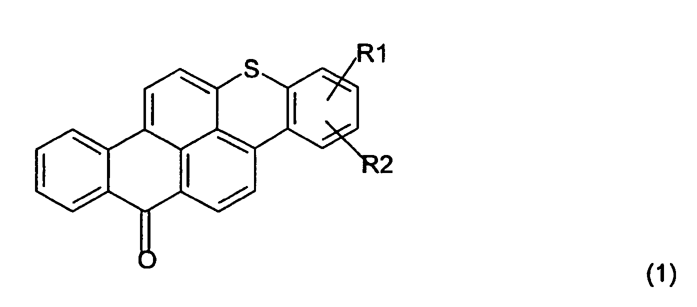 and not more than 0.5 % by weight of a compound of formula (2) 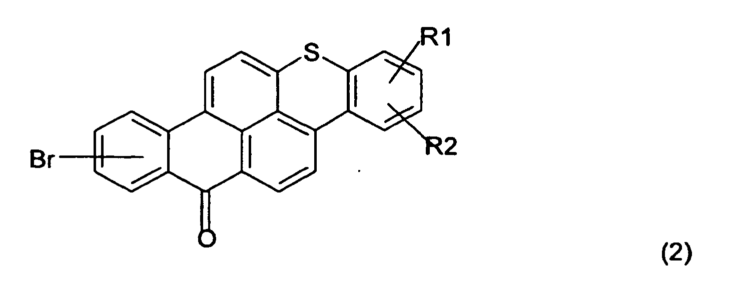 wherein
R1 and R2 independently of each other are hydrogen, methyl, ethyl, methoxy, ethoxy or chlorine;
the weight percentages being based on the total weight of the benzothioxanthene dye composition (100 %).
The rest, preferably up to 0.6 % by weight, can be inorganic salts, such as NaBr, water or a combination thereof.

In a preferred embodiment, R1 and R2 are both hydrogen.
In another preferred embodiment, the compound of formula (2) is 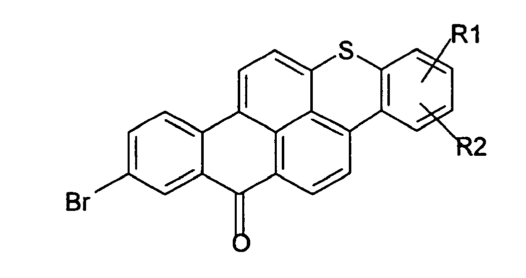 wherein R1 and R2 have the meanings given above, most preferably both are hydrogen.

In another aspect, the present invention refers to the-foregoing use, wherein the benzothioxanthene dye has been synthesized from a 3-bromobenzanthrone having a maximum amount of 0.5 % by weight of a dibromobenzanthrone, in particular 3,9-dibromobenzanthrone.

Consumer goods which are subject to food and consumer goods laws in many countries comprise:
Articles that are intended to be used in the manufacture, treatment, placing on the market or consumption of foods and thereby to come into contact with the foods or to act on these;
Packs, containers and other packaging intended to come into contact with cosmetic products or tobacco products;
Articles that are intended to come into contact with the mucous membranes of the mouth;
Articles that are intended for body care;
Toys and joke articles;
Articles that are intended to come into more than temporary contact with the human body such as clothing, bed linen, masks, wigs, hair pieces, false eyelashes, bracelets, spectacle frames.

In another aspect, the present invention refers to a benzothioxanthene dye composition for the coloration of consumer goods and food packaging, characterized in that said benzothioxanthene dye composition consists of at least 99.0 % by weight of a compound of formula (1) 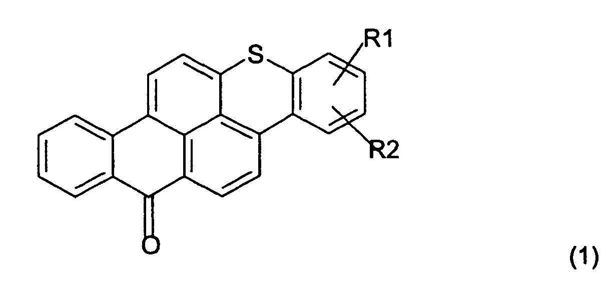 and not more than 0.5 % by weight of a compound of formula (2) 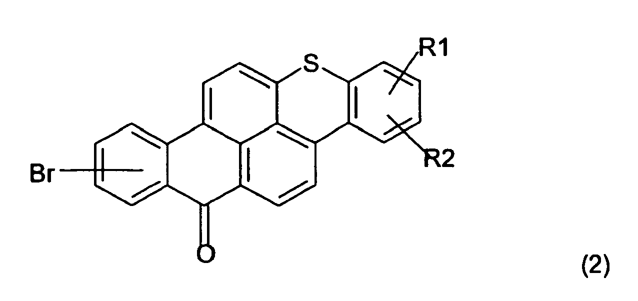 wherein
R1 and R2 independently of each other are hydrogen, methyl, ethyl, methoxy, ethoxy or chlorine;
and 0 to 0.6 % by weight of inorganic salts, e. g. NaBr, water or a combination thereof,
the weight percentages being based on the total weight of the benzothioxanthene dye composition (100%).
In a preferred embodiment, R1 and R2 are both hydrogen.
In another preferred embodiment, the compound of formula (2) is 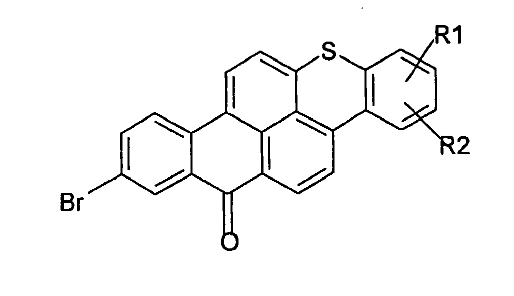 wherein R1 and R2 have the meanings given above, most preferably both are hydrogen.

The present invention refers to a method for preparing a non-corrosive, non-mutagenic and non skin sensitizing benzothioxanthene dye composition, comprising condensation of 2-aminothiophenol with a 3-bromobenzanthrone having a maximum amount of 0.5 % by weight of a dibromobenzanthrone, especially 3,9-dibromobenzanthrone, followed by diazotization and cyclisation, as specified in claim 1.

Benzothioxanthene dyes can be synthesized according to the following reaction scheme which is exemplary for C.I. Solvent Orange 63:

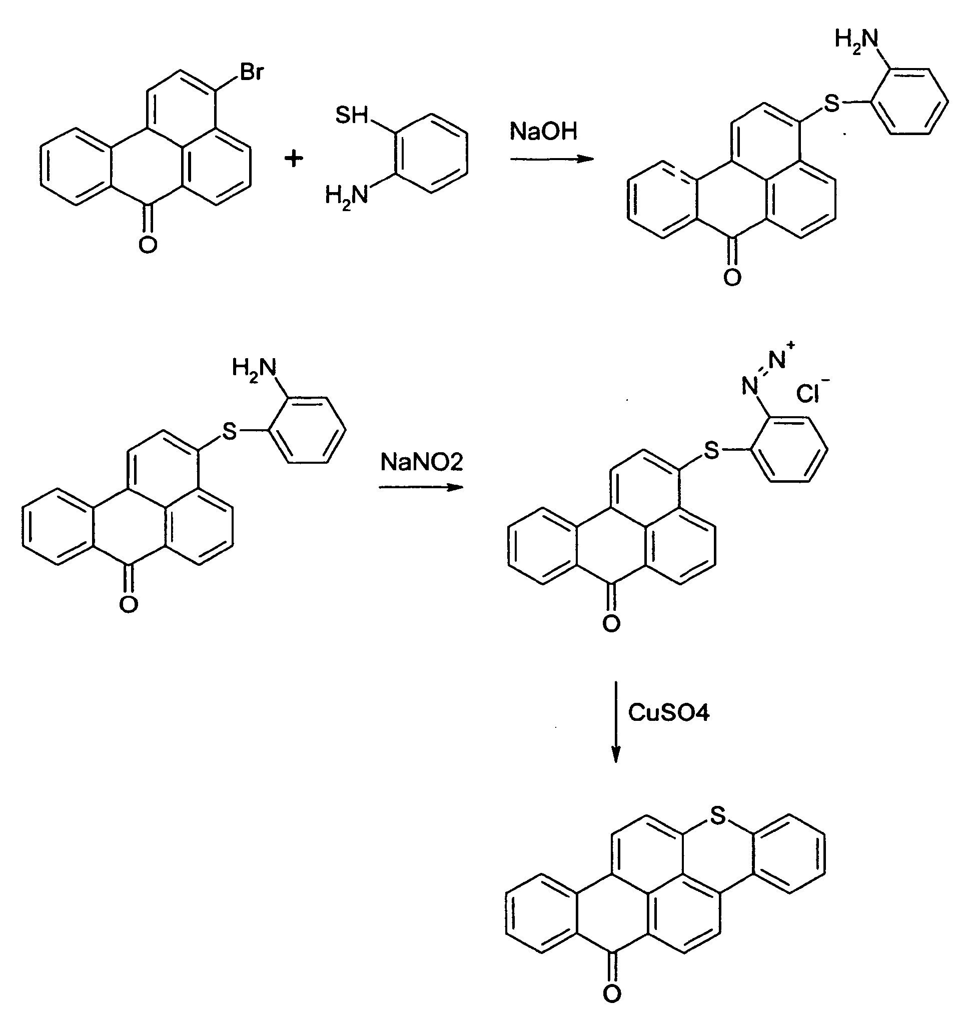

Under practical conditions, also dibromobenzanthrone, e. g. 3,9-dibromobenzanthrone (Fig. 2) reacts with 2-aminothiophenol and gives at the end of the process brominated isomers of the benzothioxanthene dye (Fig. 3):
Fig. 2- Chemical structure of 3,9 dibromo benzanthrone: 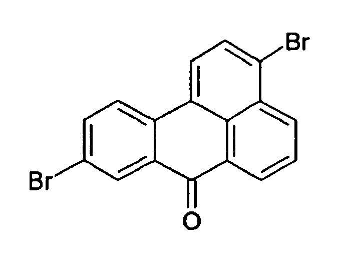
Fig. 3- Main brominated isomer of Solvent Orange 63:

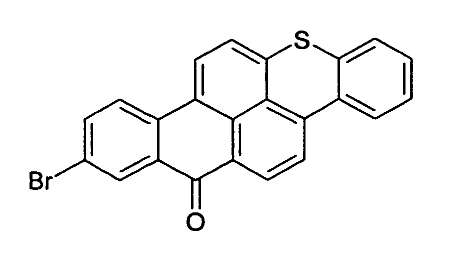

This brominated isomer of Solvent Orange 63 has the same coloristic properties as the non-brominated dye, therefore it is not possible to detect, identify and quantify it by colorimetric measurements. Furthermore, its physical-chemical properties are also quite similar, therefore it is impossible to separate this brominated dye by the common chemical purification methods, such as crystallization or washing with solvents.

Commercially available 3-bromobenzanthrone usually contains more than 1 % by weight, mostly between 1 and 10 % by weight, based on the total weight of said sample, of a dibromobenzanthrone, in most cases 3,9-dibromobenzanthrone.
The bromobenzanthrone purity can be assessed by means of HPLC, as specified hereinafter.
In order to reduce the level of the by-product dibromobenzanthrone below 0.5 % by weight, a purification step must be performed, consisting in the dispersion of the crude 3-bromobenzanthrone in an organic solvent that extracts the by-products, followed by filtration. The washing with solvent can be repeated, if necessary.

Suitable organic solvents for the purification can be dialkylated carbonamides, such as dimethylformamide, dimethylacetamide, N-methylpyrrolidone, N-methyl-piperidone-2, N-formyl-morpholin, dimethylsulfoxide, sulfolan, acetonitril, propionitril, and mixtures thereof. Preferred solvent is N-methylpyrrolidone.
The washing with solvent is preferably performed at a temperature between 30 and 50 °C.
The purified 3-bromobenzanthrone material obtained can now be introduced into the synthesis of the benzothioxanthene dyestuff. The methods for synthesis are known to the skilled artisan, for example as described in EP 0 492 232 A1, Example 15. 3-bromobenzanthrone is reacted with a 2-aminothiophenol in a polar aprotic organic solvent, such as N-methyl-pyrrolidone, in the presence of a strong base, such as sodium hydroxide, at elevated temperatures, such as between 40 and 120 °C.
The condensed product obtained is diazotized in a usual way, e.g. with sodium nitrite, and then cyclisized at elevated temperatures, e. g. between 50 and 100 °C, and isolated.
The resulting benzothioxanthene dyestuff no longer exhibits corrosive, mutagenic or skin sensitizing effects.

Thus, we got experimental evidence that the brominated contaminant, by-product of a specific impurity of the raw material for this dyestuff, but not the dyestuff itself, is responsible for corrosivity by processing and the potential mutagenic and skin sensitization activity.

Solvent Orange 63 with above mentioned purity specification should be preferred to avoid corrosion on processing equipment, for improving industrial hygiene during handling and processing and for safety in sensitive end uses like the coloration of consumer goods, food packaging and toys.

### Examples:

### NMP = N-methylpyrrolidone; DMF = dimethylformamide

### Assessment of bromobenzanthrone purity:

Samples for HPLC were prepared by dissolving 40 mg of material in 50mL DMF. They were injected on a Agilent 1100 HPLC system. The column effluent was monitored by on-line diode-array DAD detector. The separation of the different products was accomplished on a Hypersil C₁₈ column, (5 µ, 100 mm length) maintained at 30 °C. The mobile phase consisted of a mixture water: acetonitrile (60:40 during the first 10 minutes, then 30:70 for 10 minutes and finally 60:40 until the end of the analysis) and was pumped at a flow rate of 1.0mL/min. The retention times were
* Benzanthron : 8.7min
* 3-chlorobenzanthrone : 12.1 min
* 3-bromobenzanthrone : 12.8 min
* 3,9-dibromobenzanthron : 18.4 min
respectively, as measured at the UV detector.

### Raw material samples:

The following 3-bromobenzanthrone samples were used, the content of 3,9-dibromobenzanthrone was determined by means of HPLC at conditions as specified above:
Sample A: 0.3 % by weight 3,9-dibromobenzanthrone
Sample B: 0.5 % by weight 3,9-dibromobenzanthrone
Sample C: 1.9 % by weight 3,9-dibromobenzanthrone (commercial, Comparative)
Sample D: 8.3 % by weight 3,9-dibromobenzanthrone (commercial, Comparative).

### Preparation of Sample A:

200 g of purified 3-bromobenzanthrone ( = Sample B) were washed with 800 ml of NMP at 50°C for 30 min., and then filtered and dried at 80 °C.

### Preparation of Sample B:

200 g of commercial 3-bromobenzanthrone ( = Sample C) were washed with 800 ml of NMP at 50° for 30 min., and then filtered and dried at 50 °C.

A 3,9-dibromobenzanthrone content of 0.9 % by weight was achieved. The process was repeated twice, until Sample B quality was obtained.

### Manufacture of benzothioxanthene dye:

A solution of 63.2 g 2-aminothiophenol in 400 ml NMP was combined with 20.5 g powderous sodium hydroxide and the mixture was stirred under nitrogen atmosphere for 1 hour at 60 °C. Then, a solution of 154.6 g 3-bromobenzanthrone (above Samples A, B, C or D) in 850 g NMP was added and the condensation reaction completed by stirring for two hours at 80 °C.
Then, 58 g water and 51.75 g sodium nitrite were added and 75.4 g of 32 % (w/w) hydrochloric acid were metered in at 50°C. The mixture was stirred for 3 hours at 70 °C to complete cyclization, cooled down to 5°C, filtered and the presscake washed with 700 g of NMP and 2 l of water.
In the case of Samples C and D, this final washing step with NMP and water was repeated twice.
After drying at 110°C 132 g of C. I. Solvent Orange 63 were obtained.

Content of organic bromine (determined experimentally by liquid chromatography of ions, DIN EN ISO 10304-1):
Solvent Orange 63 from Sample A: 0.06 % organic Br
Solvent Orange 63 from Sample B: 0.1 % organic Br
Solvent Orange 63 from Sample C: 0.36 % organic Br (Comparative)
Solvent Orange 63 from Sample D: 1.6 % organic Br (Comparative)

It is evident that the final washing step cannot reduce the amount of brominated side-product.

### Corrosion test:

A granular compound containing 0.5 % by weight of Solvent Orange 63 prepared from above Sample A and dispersed in a polyethylene terephthalate carrier was extruded into a single screw extruder at 275°C ca. for 8 hours. No sign of corrosion on the metal parts of the processing machine was observed.

A granular compound containing 0.5 % by weight of Solvent Orange 63 prepared from above Sample B and dispersed in a polyethylene terephthalate carrier was extruded into a single screw extruder at 275°C ca. for 8 hours. No sign of corrosion on the metal parts of the processing machine was observed.

A granular compound containing 0.5 % by weight of Solvent Orange 63 prepared from above Sample C and dispersed in a polyethylene terephthalate carrier was extruded into a single screw extruder at 275°C ca. for 8 hours. A slight corrosion effect on the metal parts of the processing machine was observed.

A granular compound containing 0.5 % by weight of Solvent Orange 63 according to above Sample A and dispersed in a polyethylene terephthalate carrier was extruded into a single screw extruder at 275°C ca. for 8 hours. A distinct corrosion on the metal parts of the processing machine was observed.

### Ames test:

Solvent Orange 63 as prepared above was subjected to Ames test for mutagenity. The strains used are among those recommended by OECD 471: Salmonella typhimurium and E.coli.
The batches of Solvent Orange 63 coming from Sample A and B and C were not mutagenic to Salmonella typhimurium Strain TA98 in the presence of S9 mix, while the batch with higher organic bromine content (from Sample D) was mutagenic to these strains with or without liver microsomal activation (S9 mix).

Thus, we got experimental evidence that the brominated contaminant, but not the dyestuff itself, is responsible for the potential mutagenic activity.

### LLNA test:

Solvent Orange 63 as prepared above was subjected to LLNA test for skin sensitization, according to OECD Guideline 429 in suitable vehicle, for example acetone:olive oil (4+1).
The batches of Solvent Orange 63 coming from Sample A and B were not skin sensitizers, while the batches with higher organic bromine content (from Samples C and D) resulted to be skin sensitizers.

Again we got experimental evidence that the brominated contaminant, but not the dyestuff itself, is responsible for the potential sensitizing activity.

## Claims

1. A method for preparing a non-corrosive, non-mutagenic and non-sensitizing benzothioxanthene dye composition containing at least 99.0 % by weight of a compound of formula (1) 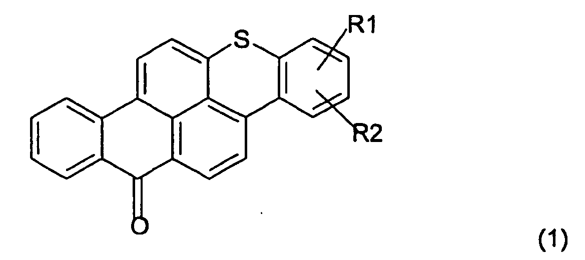 and not more than 0.5 % by weight of a compound of formula (2) 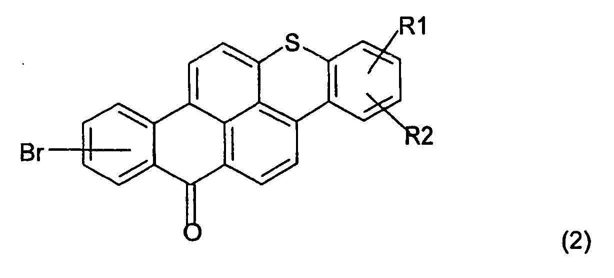 wherein
R1 and R2 independently of each other are hydrogen, methyl, ethyl, methoxy, ethoxy or chlorine,
comprising condensation of 2-aminothiophenol with a 3-bromobenzanthrone having a maximum amount of 0.5 % by weight of a dibromobenzanthrone, especially 3,9-dibromobenzanthrone, followed by diazotization and cyclisation,
wherein the 3-bromobenzanthrone having a maximum amount of 0.5 % by weight of dibromobenzanthrone is obtained by dispersing and washing it in an organic solvent, followed by filtration, and
wherein the organic solvent is a dialkylated carbonamide, such as dimethylformamide, dimethylacetamide, N-methylpyrrolidone, N-methyl-piperidone-2, N-formyl-morpholin, dimethylsulfoxide, sulfolan, acetonitril, propionitril, or a mixture thereof.

## Patentansprüche

1. Verfahren zur Herstellung einer nichtkorrosiven, nichtmutagenen und nichtsensibilisierenden Benzothioxanthenfarbstoff-Zusammensetzung, enthaltend mindestens 99,0 Gew.-% einer Verbindung der Formel (1) 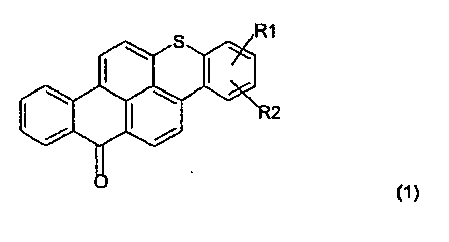 und höchstens 0,5 Gew.-% einer Verbindung der Formel (2) 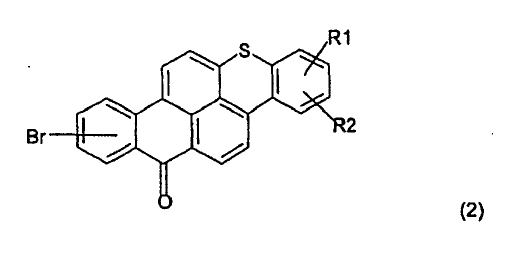 wobei
R1 und R2 unabhängig voneinander für Wasserstoff, Methyl, Ethyl, Methoxy, Ethoxy oder Chlor stehen,
durch Kondensation von 2-Aminothiophenol mit einem 3-Brombenzanthron mit einem Anteil an Dibrombenzanthron, insbesondere 3,9-Dibrombenzanthron, von maximal 0,5 Gew.-%, anschließender Diazotierung und Cyclisierung,
wobei das 3-Brombenzanthron mit einem maximalen Dibrombenzanthronanteil von 0,5 Gew.-% durch Dispergieren und Waschen in einem organischen Lösungsmittel und anschließender Filtration erhalten wurde und
wobei als organisches Lösungsmittel ein dialkyliertes Carbonamid, wie Dimethylformamid, Dimethylacetamid, N-Methylpyrrolidon, N-Methylpiperidon-2, N-Formylmorpholin, Dimethylsulfoxid, Sulfolan, Acetonitril, Propionitril oder ein Mischung davon dient.

## Revendications

1. Méthode de préparation d'une composition de colorant benzothioxanthène non corrosive, non mutagène et non sensibilisante, contenant au moins 99,0 % en poids d'un composé de formule (1) 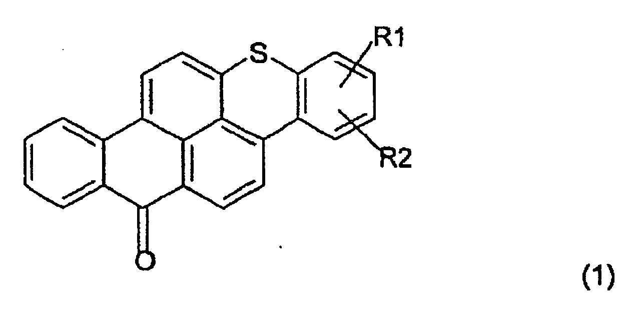 et pas plus de 0,5 % en poids d'un composé de formule (2) 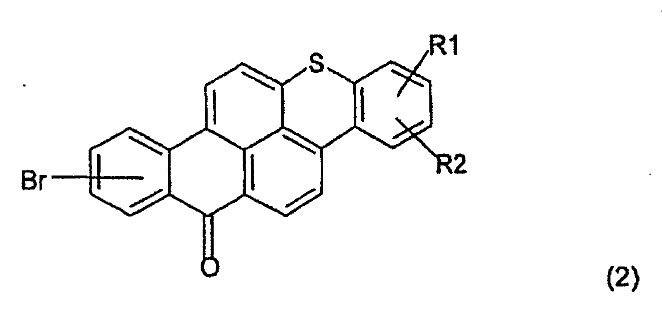 dans lesquelles R1 et R2 sont indépendamment l'un de l'autre hydrogène, méthyle, éthyle, méthoxy, éthoxy ou chlore,
comprenant la condensation du 2-aminothiophénol avec une 3-bromobenzanthrone ayant une quantité maximale de 0,5 % en poids d'une dibromobenzanthrone, notamment la 3,9-dibromobenzanthrone, suivie de diazotisation et de cyclisation, la 3-bromobenzanthrone ayant une quantité maximale de 0,5 % en poids de dibromobenzanthrone étant obtenue par sa dispersion et son lavage dans un solvant organique, suivis de filtration, et
le solvant organique étant un carbonamide dialkylé tel que le diméthylformamide, le diméthylacétamide, la N-méthylpyrrolidone, la N-méthyl-pipéridone-2, la N-formyl-morpholine, le diméthylsulfoxyde, le sulfolane, l'acétonitrile, le propionitrile, ou un mélange de ceux-ci.
